# EUROPÄISCHE PATENTSCHRIFT

(11) **EP 0 387 369 B1**
(45) Veröffentlichungstag und Bekanntmachung des Hinweises auf die Patenterteilung: **07.09.1994**
(21) Anmeldenummer: 89104478.6
(22) Anmeldetag: 14.03.1989
(51) Int. Cl.: H05G 1/26, G03B 42/02, G01T 1/29

(54) **Röntgendiagnostikeinrichtung mit einem Speicherleuchtschirm**
X-ray diagnostic device with a fluorescent storage screen
Dispositif de radiodiagnostic avec un écran luminescent de mémorisation

(43) Veröffentlichungstag der Anmeldung: 19.09.1990
(73) Patentinhaber: SIEMENS AKTIENGESELLSCHAFT, 80333 München (DE)
(72) Erfinder: Lange, Gottfried, Dipl.-Phys., D-8520 Erlangen (DE); Reinfelder, Hans-Erich, Dr.rer.nat., D-8520 Erlangen (DE)

(56) Entgegenhaltungen:
- EP-A- 0 135 723
- EP-A- 0 157 209
- EP-A- 0 182 095
- EP-A- 0 182 099
- EP-A- 0 287 129
- DE-A- 3 725 826
- US-A- 4 507 797
- Siemens DATA-Blatt GIGANTOS 1012 MP, 1980

## Beschreibung

Die Erfindung betrifft eine Röntgendiagnostikeinrichtung mit einem Speicherleuchtschirm für die latente Speicherung des jeweiligen Röntgenstrahlenbildes, mit einem Röntgengenerator, mit einer daran angeschlossenen Röntgenaufnahmevorrichtung zu Erzeugung des Röntgenstrahlenbildes, mit einer Auslesevorrichtung, bei der zur Bildwiedergabe der Speicherleuchtschirm durch eine flächenförmige Abtastung mittels eines Abtaststrahles einer Strahlenquelle bildpunktweise zum Leuchten angeregt wird, mit einer Detektorvorrichtung zum Erfassen des von dem Speicherleuchtschirm emittierten Lichtes und mit einem Bildwiedergabe system.

In der EP-A-0 094 843 ist eine derartige Röntgendiagnostikeinrichtung beschrieben, bei der der Speicherleuchtschirm in einer Aufnahmestation mit Röntgenstrahlen bestrahlt wird, so daß in ihm Defektelektronen erzeugt werden, die in Potentialfallen (Traps) gespeichert werden. Anschließend wird der belichtete Speicherleuchtschirm in eine Auslesestation befördert, in der eine Auslesevorrichtung die gesamte Fläche dieses Speicherleuchtschirmes mit einer zusätzlichen Strahlenquelle, beispielsweise einem Laser, bildpunktweise abtastet, so daß die in den Traps gespeicherten Elektronen angeregt werden und in Rekombinationszentren zurückfallen können, wobei die Energiedifferenz in Form von Lichtquanten mit einer gegenüber der Wellenlänge der Strahlenquelle anderen Wellenlänge abgestrahlt wird. Durch einen Detektor wird das derart emittierte Licht erfaßt, so daß das gespeicherte Röntgenstrahlenbild aus dem Speicherleuchtschirm ausgelesen wird. Dieses Bild wird dann in bekannter Weise einem Bildwiedergabesystem zugeführt, das die Bildwiedergabe entweder auf einem Monitor oder als Hardcopy bewirkt.

Zur flächenförmigen Abtastung des Speicherleuchtschirmes wird der Laserstrahl beispielsweise in horizontaler Richtung durch einen Spiegel abgelenkt und in vertikaler Richtung verschoben, so daß alle auf dem Speicherleuchtschirm liegenden Bildpunkte nacheinander abgetastet werden. Das von dem Speicherleuchtschirm emittierte Licht wird durch einen optischen Kollektor erfaßt und auf der lichtempfindlichen Eingangsfläche eines Detektors abgebildet. Das Ausgangssignal des Detektors wird beispielsweise einer normalen Fernsehkette zur Wiedergabe des Röntgenbildes auf einem Monitor zugeführt. Als Speicherleuchtstoffe können hierbei die aus der DE-C-3 347 207 bekannten, mit Europium aktivierte Barium-Fluor-Brom-Chlorid-Verbindungen Verwendung finden, die sich durch sichtbares Licht (Photostimulation) anregen lassen. Zur Anregung dieses Speicherleuchtstoffes läßt sich der üblicherweise verwendete He-Ne-Laser verwenden, der gebündelte Strahlen von einer Wellenlänge von 633 nm erzeugt.

Derartige Röntgendiagnostikeinrichtungen weisen aber den Nachteil auf, daß durch die Unterbringung der Speicherfolien in lichtdichten Kassetten, die Entnahme der Folie in die Auslesemachine mit allen mechanischen Handhabungen und die Voraus-Auslesung der Folien zur Dynamikerfassung sehr große Zeitabstände bis zum Vorhandensein des Röntgenbildes auf dem Fernsehmonitor bzw. der Hardcopyvorlage vergehen.

In der EP-A-0 135 723 ist eine Aufnahmevorrichtung mit einer Abtastvorrichtung für Speicherleuchtstoffe beschrieben, bei der eine Steuervorrichtung die Einschaltung der Röntgenröhre, die Einstellung der Röntgenblende entsprechend der gewünschten Größe der Belichtungsfläche und die Position des Halters für den Speicherleuchtschirm, den Transport des Speicherleuchtschirmes in der Aufnahmevorrichtung, den Transport in der Abtastvorrichtung und die Positionssteuerung der Wiedergabevorrichtung durchführt. Die Aufnahmevorrichtung kann mit der Auslesevorrichtung eine Einheit bilden, wobei je ein Magazin für unbelichtete und belichtete Speicherleuchtschirme vorgesehen ist. Da hier im wesentlichen die Steuerung der Größe der Aufnahmefläche auf dem Speicherleuchtschirm angesprochen ist, kann aufgrund einer Auswahl der zu bestrahlenden Fläche die Röntgenblende eingestellt werden. Anschließend bewirkt die Steuervorrichtung, daß in der Aufnahmevorrichtung ein Speicherleuchtschirm dem Magazin entnommen und richtig plaziert wird. Daraufhin wird die Röntgenröhre eingeschaltet. Nach erfolgter Belichtung wird der Speicherleuchtschirm in eine Warteposition gebracht und in ein Magazin abgelegt. In der Auslesevorrichtung, in der der Speicherleuchtschirm überführt wird, bewirkt die Steuervorrichtung einen Antrieb der Transportriemen zur Ausrichtung des Speicherleuchtschirmes. Das ausgelesene Signal wird dann einer durch die Steuervorrichtung gesteuerten Wiedergabevorrichtung zugeführt.

Um genaue Daten über den belichteten Speicherleuchtschirm bereich zu erhalten, wird dieser aufgrund einer Vorabtastung ausgelesen, so daß dadurch die Parameter der Auslesevorrichtung gesteuert werden können.

Die Erfindung geht von der Aufgabe aus, eine Röntgendiagnostikeinrichtung der eingangs genannten Art zu schaffen, die kompakt aufgebaut ist und mit der sich eine schnelle und den jeweiligen Gegebenheiten optimal angepaßte Aufnahme des Strahlenbildes erreichen läßt.

Die Aufgabe wird erfindungsgemäß dadurch gelöst, daß der Röntgengenerator mit der Auslesevorrichtung derart verbunden ist, daß auf Grund von Einstellungen des Röntgengenerators und/oder Messungen die Auflösung, Helligkeit und Löschung beeinflussende Parameter der Auslesevorrichtung eingestellt werden. Dadurch wird erreicht, daß bei bestimmten Einstellungen des Röntgengenerators sowie den von der Röntgendiagnostikeinrichtung durchgeführten Messungen, z.B. der Helligkeit des Röntgenbildes, Parameter eingestellt werden, die die Auflösung, Helligkeit und Löschung beeinflussen und sich aus den Daten ableiten lassen.

Einen einfachen Aufbau der Röntgendiagnostikeinrichtung erhält man, wenn der Röntgengenerator eine Steuervorrichtung mit Organtasten aufweist, die mit der Auslesevorrichtung verbunden ist. Aufgrund der ausgewählten Organtaste kann dann je nach aufgenommenem Organ die Auflösung und Helligkeit der Auslesevorrichtung variiert werden. So kann beispielsweise eine Knochenaufnahme feiner abgetastet werden als eine Thorax-Aufnahme. Weiterhin kann aufgrund der unterschiedlichen Helligkeit die Stärke der Auslesung eingestellt werden.

Die Veränderung der Auflösung bei einer Auslesevorrichtung mit einer Ablenkvorrichtung für den Abtaststrahl und einer Transporteinheit für den Speicherleuchtschirm kann dadurch erreicht werden, wenn die Steuervorrichtung mit der Ablenkvorrichtung und der Transporteinheit zur Steuerung der Auflösung verbunden ist. Dadurch kann die Geschwindigkeit der Ablenkvorrichtung und die Vorschubgeschwindigkeit der Transporteinheit variiert werden, so daß bei grober Abtastung die Vorschubgeschwindigkeit und die Abtastgeschwindigkeit in Zeilenrichtung groß gewählt werden kann, so daß bei vorgegebenen Takten der Erfassung der Daten relativ große Bereiche pro Bildpunkt abgetastet werden. Soll dagegen eine feine und genaue Abtastung erfolgen, so müssen beide Geschwindigkeiten in bezug auf die Abtastfrequenz klein gewählt werden.

Unerwünschte Helligkeitsunterschiede im Röntgenbild lassen sich ausgleichen, wenn die Steuervorrichtung mit dem Detektor zur Steuerung der Auslesespannung oder mit der Strahlenquelle zur Steuerung der Helligkeit des Abtaststrahles verbunden ist. Die noch verbleibende gespeicherte Restladung läßt sich optimal auch bei unterschiedlicher Größe löschen, wenn die Steuervorrichtung mit der Löschvorrichtung verbunden ist. Dadurch läßt sich die Helligkeit der Löschvorrichtung einstellen, so daß gewährleistet ist, daß die in dem Speicherleuchtschirm enthaltenen Restinformationen auf jeden Fall, aber nur mit der dafür erforderlichen Energie, gelöscht werden. Eine schnelle und einfache Ablenkvorrichtung erhält man, wenn sie eine holographische Ablenkvorrichtung für den Abtaststrahl ist.

Einen besonders einfachen und kompakten Aufbau erhält man, wenn die Auslesevorrichtung in einem Gehäuse angeordnet ist, in dem eine Tragvorrichtung für den Speicherleuchtschirm angebracht ist, durch den der Speicherleuchtschirm von einer ersten Position für die Aufnahme in eine zweite Position zur Löschung in einer Ebene verfahren werden kann, und wenn die Abtastvorrichtung und der Detektor zwischen beiden Positionen unterhalb des Trägers angeordnet sind, so daß eine Abtastung beim Verschieben des Speicherleuchtschirmes von seiner ersten Position in seine zweite Position erfolgt. Dies bewirkt einen kompakten Aufbau, da Aufnahmeposition und Löschposition direkt nebeneinander liegen können und die Abtastvorrichtung zwischen beiden Positionen angeordnet ist. Da sie unterhalb der Transportvorrichtung angebracht ist, beeinflußt sie weder die Aufnahme noch den Löschvorgang.

Die Erfindung ist nachfolgend anhand eines in der Zeichnung dargestellten Ausführungsbeispieles näher erläutert. Es zeigen:
- FIG 1: den schematischen Aufbau einer erfindungsgemäßen Röntgendiagnostikeinrichtung und
- FIG 2: den Wiedergabeteil der erfindungsgemäßen Röntgendiagnostikeinrichtung gemäß FIG 1.

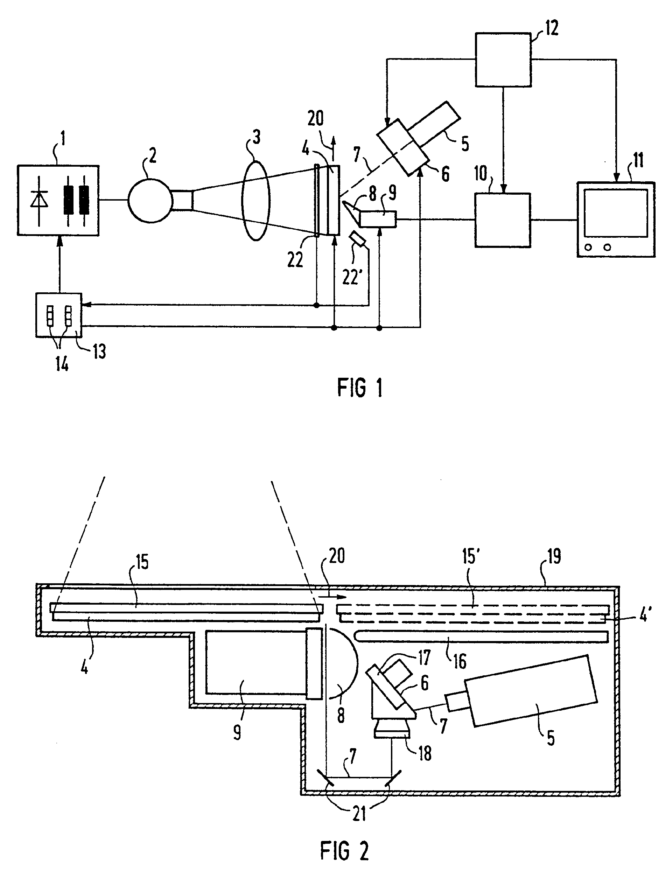

In der FIG 1 ist ein Hochspannungsgenerator 1 dargestellt, der eine Röntgenröhre 2 speist, die Röntgenstrahlen aussendet, die einen Patienten 3 durchdringen. Die durch den Patienten 3 entsprechend seiner Transparenz geschwächten Röntgenstrahlen fallen auf einen Lumineszenz-Speicherleuchtschirm 4. Dieses auffallende Strahlenbild erzeugt in dem Speicherleuchtschirm 4, wie bereits beschrieben, Defektelektronen, die in Traps des Speicherleuchtstoffes gespeichert werden, so daß in dem Speicherleuchtschirm 4 nach der Bestrahlung ein latentes Bild gespeichert ist.

Zur Wiedergabe des latenten, gespeicherten Bildes wird üblicherweise der Speicherleuchtschirm 4 durch eine Strahlenquelle, beispielsweise durch einen Laser 5, angeregt. Dem Laser 5 ist eine Ablenkvorrichtung 6 vorgeschaltet, die den Abtaststrahl 7 zeilenweise über den Speicherleuchtschirm 4 ablenkt. Die Ablenkvorrichtung 6 für den Abtaststrahl 7 kann beispielsweise aus einem elektrooptischen Strahlenablenker für die horizontale Ablenkung bestehen. Die vertikale Ablenkung kann dadurch erfolgen, daß der Speicherleuchtschirm 4 in Richtung des Pfeiles 20 verschoben wird, so daß nacheinander die gesamte Fläche des Speicherleuchtschirmes durch den Abtaststrahl 7 bildpunktweise abgetastet werden kann.

Ein Lichtleiter 8 erfaßt das von dem Speicherleuchtschirm 4 emittierte Licht und leitet es auf einen Detektor 9, der die Helligkeit der abgetasteten Bildpunkte erfaßt und in ein elektrisches Signal umwandelt, das einer Wiedergabeschaltung 10 zugeführt wird, die aus einzelnen analogen Ausgangssignalen des Detektors 9 ein Videosignal zur Darstellung auf einem Monitor 11 erzeugt. Eine Steuereinrichtung 12 bewirkt bei der Wiedergabe die Synchronisation der Ablenkvorrichtung 6, der Wiedergabeschaltung 10 und des Monitors 11. Die Wiedergabeschaltung 10 kann in bekannter Weise Bildspeicher, eine Verarbeitungsschaltung und Wandler aufweisen.

Für die Einstellung der Aufnahmewerte des Hochspannungsgenerators 1 ist eine Steuervorrichtung 13 vorgesehen, die beispielsweise mit Organtasten 14 versehen sein kann. Durch diese Steuervorrichtung 13 lassen sich Aufnahmewerte des Hochspannungsgenerators 1 einstellen, die in bekannter Weise den einzelnen Organtasten 14 zugeordnet sind.

In FIG 2 ist eine derartige Aufnahmestation dargestellt, bei der an einer in einem Gehäuse 19 angeordneten Transportvorrichtung 15 der Speicherleuchtschirm 4 befestigt ist. In der dargestellten Stellung befindet sich die Transportvorrichtung 15 mit dem Speicherleuchtschirm 4 in der ersten Position, der Aufnahmeposition, in der der Speicherleuchtschirm 4 durch die Röntgenstrahlen bestrahlt wird. Nach erfolgter Bestrahlung verschiebt die Transportvorrichtung 15 den Speicherleuchtschirm 4 in Richtung des Pfeiles 20. Dabei wird gleichzeitig der Speicherleuchtschirm 4 durch die unterhalb der Transportvorrichtung 15 angeordnete Auslesevorrichtung 5 bis 9 abgetastet. Der vom Laser 5 erzeugte Abtaststrahl 7 wird einer holographischen Ablenkvorrichtung 17 als Ablenkvorrichtung 6 zugeführt, die ein Objektiv 18 aufweist, das den Abtaststrahl 7 auf dem Speicherleuchtschirm 4 fokussiert. Eine derartige holographische Ablenkvorrichtung 17 ist beispielsweise in dem Prospekt der Firma Holotec Ltd., Rochester, N.Y., mit Druckzeichen 8/84 ausführlich beschrieben. Damit eine ausreichende Ablenkung des Abtaststrahles 7 über die gesamte Breite des Speicherleuchtschirmes 4 auch bei geringen Abmessungen erfolgen kann, wird der Abtaststrahl 7 über Spiegel 21 mehrfach umgeleitet, so daß sich ein gefalteter Strahlengang ergibt. Der Abtaststrahl 7 fällt dabei zwischen einen Lichtleiter 8 und einen Detektor 9, der in der EP-A-0 363 522 ausführlich beschrieben ist. Es lassen sich aber auch die üblichen, aus Quarzglas, Plexiglas oder ähnlichem bestehenden Lichtleiter verwenden.

Ist der Abtastvorgang beendet, so hat die Transportvorrichtung 15 den Speicherleuchtschirm 4 soweit verschoben, daß er sich in der zweiten Position, in der er gestrichelt dargestellt ist (4′, 15′), befindet. In dieser zweiten Position erfolgt nunmehr die Löschung durch eine Löschvorrichtung 16, die, wie dargestellt, unterhalb des Speicherleuchtschirmes 4′und der Transportvorrichtung 15′ angeordnet sein kann.

Diese gesamte Auslesevorrichtung ist in dem Gehäuse 19 untergebracht, das beispielsweise an einem fahrbaren Gestell befestigt sein kann. Dadurch ist es möglich, diese Aufnahmeeinheit bei Bedarf unter eine Patientenliege zu schieben, auf der sich der zu untersuchende Patient 3 befindet, so daß die gewünschten Aufnahmen erstellt werden können. Diese Aufnahmestation kann aber auch fest mit dem Patientenlagerungstisch gekoppelt sein.

Der Aufnahmestation kann aber auch eine Meßvorrichtung 22 oder 22′ zugeordnet sein, die entweder die Röntgenstrahlen direkt (22) oder das während der Bestrahlung des Speicherleuchtschirmes 4 durch Spontanemission ausgesandte Licht (22′) mißt. Durch diese Meßvorrichtung 22 kann die Aufnahme durch Steuerung des Hochspannungsgenerators 1 abgeschaltet werden. Gleichzeitig liefert die Meßvorrichtung 22 Werte an die Steuervorrichtung 13, durch die, wie bereits anhand der Erläuterung der Organtasten beschrieben, die Auslesespannung des Detektors 9, die Helligkeit und Abtastgeschwindigkeit des Abtaststrahles 7 sowie die Geschwindigkeit der Transportvorrichtung 15 für den Speicherleuchtschirm 4 eingestellt wird.

Der Speicherleuchtschirm 4 kann aber auch auf der Transportvorrichtung 15 angebracht sein, die in diesem Falle nur aus einem Rahmen besteht, der die gesamte Aufnahmefläche sowohl nach oben, zur Röntgenröhre hin, und nach unten, zur Abtastvorrichtung 5 bis 9 hin, freigibt.

Durch diese erfindungsgemäße Ausführung der Röntgendiagnostikeinrichtung erhält man eine einfache und optimale Auslesung der in einem Speicherleuchtschirm gespeicherten Röntgenbilder mit einem kompakten Aufbau.

## Patentansprüche

1. Röntgendiagnostikeinrichtung mit einem Speicherleuchtschirm (4) für die latente Speicherung des jeweiligen Röntgenstrahlenbildes, mit einem Röntgengenerator (1, 13, 14), mit einer daran angeschlossenen Röntgenaufnahmevorrichtung (2) zur Erzeugung des Röntgenstrahlenbildes, mit einer Auslesevorrichtung (5 bis 9), bei der zur Bildwiedergabe der Speicherleuchtschirm (4) durch eine flächenförmige Abtastung mittels eines Abtaststrahles (7) einer Strahlenquelle (5) bildpunktweise zum Leuchten angeregt wird, mit einer Detektorvorrichtung (8, 9) zum Erfassen des von dem Speicherleuchtschirm (4) emittierten Lichtes und mit einem Bildwiedergabesystem (10, 11), **dadurch gekennzeichnet**, daß der Röntgengenerator (1, 13, 14) mit der Auslesevorrichtung (5 bis 9) derart verbunden ist, daß auf Grund von Einstellungen des Röntgengenerators (1, 13, 14) und/oder während der Aufnahme durchgeführten Messungen die Auflösung, Helligkeit und Löschung beeinflussende Parameter der Auslesevorrichtungen (5 bis 9) eingestellt werden.

2. Röntgendiagnostikeinrichtung nach Anspruch 1, **dadurch gekennzeichnet**, daß der Röntgengenerator (1, 13, 14) eine Steuervorrichtung (13) mit Organtasten (14) aufweist, die mit der Auslesevorrichtung (5 bis 9) verbunden ist.

3. Röntgendiagnostikeinrichtung nach Anspruch 2, bei der die Auslesevorrichtung (5 bis 9) eine Ablenkvorrichtung (6) für den Abtaststrahl (7) und eine Transporteinheit (15) für den Speicherleuchtschirm (4) aufweist, **dadurch** **gekenn****zeichnet**, daß die Steuervorrichtung (13) mit der Ablenkvorrichtung (6) und der Transporteinheit (15) zur Steuerung der Auflösung verbunden ist.

4. Röntgendiagnostikeinrichtung nach Anspruch 2 oder 3, **dadurch gekennzeichnet**, daß die Steuervorrichtung (13) mit dem Detektor (9) zur Steuerung der Auslesespannung verbunden ist.

5. Röntgendiagnostikeinrichtung nach einem der Ansprüche 2 bis 4, **dadurch gekennzeichnet**, daß die Steuervorrichtung (13) mit der Strahlenquelle (5) zur Steuerung der Helligkeit des Abtaststrahles (7) verbunden ist.

6. Röntgendiagnostikeinrichtung nach einem der Ansprüche 2 bis 5, **dadurch** **gekennzeichnet**, daß die Steuervorrichtung (13) mit der Löschvorrichtung (16) verbunden ist.

7. Röntgendiagnostikeinrichtung nach einem der Ansprüche 3 bis 6, **dadurch gekennzeichnet**, daß die Ablenkvorrichtung (6) für den Abtaststrahl (7) eine holographische Ablenkvorrichtung (17) ist.

8. Röntgendiagnostikeinrichtung nach einem der Ansprüche 1 bis 7, **dadurch gekennzeichnet**, daß die Auslesevorrichtung (5 bis 9) in einem Gehäuse (19) angeordnet ist, in dem eine Tragvorrichtung (15) für den Speicherleuchtschirm (4) angebracht ist, durch den der Speicherleuchtschirm (4) von einer ersten Position für die Aufnahme in eine zweite Position zur Löschung in einer Ebene verfahren werden kann, und daß die Abtastvorrichtung (5 bis 9) und der Detektor (9) zwischen beiden Positionen unterhalb des Trägers (15) angeordnet sind, so daß eine Abtastung beim Verschieben des Speicherleuchtschirmes (4) von seiner ersten Position in seine zweite Position erfolgt.

## Claims

1. X-ray diagnostic device having: a storage luminescent screen (4) for latent storage of the respective X-ray image; an X-ray generator (1,13,14); an X-ray exposure device (2) for producing the X-ray image, connected to said X-ray generator; a read-out device (5 to 9), in which, for image reproduction, the storage luminescent screen (4) is excited to illuminate pixel-by-pixel through uniplanar scanning by means of a scanning beam (7) of a source of radiation (5); a detector device (8,9) for detecting the light emitted by the storage luminescent screen (4); and an image reproduction system (10,11), characterised in that the X-ray generator (1,13,14) is connected to the read-out device (5 to 9) such that on the basis of settings of the X-ray generator (1,13,14) and/or measurements carried out during the exposure, parameters of the read-out devices (5 to 9) affecting the resolution, brightness and erasing are set.

2. X-ray diagnostic device according to claim 1, characterised in that the X-ray generator (1,13,14) has a control device (13) with organ keys (14), said control device being connected to the readout device (5 to 9).

3. X-ray diagnostic device according to claim 2, in which the read-out device (5 to 9) has a deflection device (6) for the scanning beam (7) and a transport unit (15) for the storage luminescent screen (4), characterised in that the control device (13) is connected to the deflection device (6) and to the transport unit (15) for controlling the resolution.

4. X-ray diagnostic device according to claim 2 or 3, characterised in that the control device (13) is connected to the detector (9) for controlling the read-out voltage.

5. X-ray diagnostic device according to one of claims 2 to 4, characterised in that the control device (13) is connected to the source of radiation (5) for controlling the brightness of the scanning beam (7).

6. X-ray diagnostic device according to one of claims 2 to 5, characterised in that the control device (13) is connected to the erasing device (16).

7. X-ray diagnostic device according to one of claims 3 to 6, characterised in that the deflection device (6) for the scanning beam (7) is a holographic deflection device (17).

8. X-ray diagnostic device according to one of claims 1 to 7, characterised in that the read-out device (5 to 9) is arranged in a housing (19), in which there is fitted a carrier device (15) for the storage luminescent screen (4), by means of which the storage luminescent screen (4) can be moved in one plane from a first position for the exposure into a second position for erasing, and in that the scanning device (5 to 9) and the detector (9) are arranged between both positions below the carrier (15), so that scanning occurs when displacing the storage luminescent screen (4) from its first position into its second position.

## Revendications

1. Appareil de radiodiagnostic comportant un écran luminescent de mémorisation (4) pour la mémorisation latente de la radiographie, comportant un générateur radiologique (1, 13, 14), un dispositif de radiographie (2) raccordé à ce générateur et servant à produire la radiographie, un dispositif de lecture (5 à 9), dans lequel pour la reproduction d'une image, l'écran luminescent de mémorisation (4) est excité de manière à devenir lumineux, au niveau des points d'image, au moyen d'une exploration d'une certaine étendue de surface à l'aide d'un faisceau d'exploration (7) issu d'une source de rayonnement (5), un dispositif de détection (8, 9) servant à détecter la lumière émise par l'écran luminescent de mémorisation (4), et un système de reproduction d'images (10, 11), caractérisé par le fait que le générateur radiologique (1, 13, 14) est relié au dispositif de lecture (5 à 9) de telle sorte que la résolution, la luminosité et l'effacement de paramètres d'influence des dispositifs de lecture (5 à 9) sont réglés sur la base de réglages du générateur radiologique (1, 13, 14) et/ou pendant l'enregistrement de mesures exécutées.

2. Appareil de radiodiagnostic suivant la revendication 1, caractérisé par le fait que le générateur radiologique (1, 13, 14) possède un dispositif de commande (13) comportant des touches (14) associées à des organes, et qui est relié au dispositif de lecture (5 à 9).

3. Appareil de radiodiagnostic suivant la revendication 2, dans lequel le dispositif de lecture (5 à 9) possède un dispositif de déviation (6) pour le faisceau d'exploration (7) et l'unité de transport (15) pour l'écran luminescent de mémorisation (4), caractérisé par le fait que le dispositif de commande (13) est relié au dispositif de déviation (6) et à l'unité de transport (15) pour la commande de la résolution.

4. Appareil de radiodiagnostic suivant la revendication 2 ou 3, caractérisé par le fait que le dispositif de commande (13) est relié au détecteur (9) pour la commande de la tension de lecture.

5. Appareil de radiodiagnostic suivant l'une des revendications 2 à 4, caractérisé par le fait que le dispositif de commande (13) est relié à la source de rayonnement (5) pour la commande de la luminosité du faisceau d'exploration (7).

6. Appareil de radiodiagnostic suivant l'une des revendications 2 à 5, caractérisé par le fait que le dispositif de commande (13) est relié au dispositif d'effacement (16).

7. Appareil de radiodiagnostic suivant l'une des revendications 3 à 6, caractérisé par le fait que le dispositif de déviation (6) pour le faisceau d'exploration (7) est un dispositif de déviation holographique (17).

8. Appareil de radiodiagnostic suivant l'une des revendications 1 à 7, caractérisé par le fait que le dispositif de lecture (5 à 9) est disposé dans un boîtier (19), dans lequel est disposé un dispositif de support (15) pour l'écran luminescent de mémorisation (4), grâce auquel l'écran luminescent de mémorisation (4) peut être amené depuis une première position d'enregistrement dans une seconde position d'effacement, dans un plan, et que le dispositif d'exploration (5 à 9) et le détecteur (9) sont disposés entre les deux positions à l'intérieur du support (15), de sorte qu'une exploration est exécutée lors du déplacement de l'écran luminescent de mémorisation (4) de sa première position dans sa seconde position.
